# EUROPEAN PATENT APPLICATION

(11) **EP 2 933 694 A2**
(43) Date of publication of application: **21.10.2015**
(21) Application number: 14075086.0
(22) Date of filing: 25.11.2014
(51) Int. Cl.: G05B 15/02

(54) **SYSTEMS AND METHODS FOR INTEGRATED WORKFLOW DISPLAY AND ACTION PANEL FOR PLANT ASSETS**

(30) Priority: 29.11.2013 US 201314093179
(71) Applicant: Aktiebolaget SKF, 415 50 Göteborg (SE)
(72) Inventor: Boerhout, Johannes Izak, San Diego California 92129 (US); Younan, Yezen Putrus, San Diego California 92123 (US)
(74) Representative: Dowling, Andrew

(57) **Abstract**

Implementations relate to systems and methods for an integrated workflow display and action panel for plant assets. According to implementations, a monitoring network connected to the various physical assets of a plant, such as fans, turbines, power supplies, and other equipment or infrastructure, can monitor those assets for purposes of trapping fault or maintenance events, recording those events, and organizing and scheduling repair or other work based on that status information. The information for all connected assets can be aggregated in one central status panel which allows a plant manager or other user to access all maintenance activity and operations in a single view. The status panel view can include activatable links to expand displays, drill into data, initiate other applications, services, or activities, and perform other tasks. The view provided can be filtered based on the user credentials for that user, such as privilege level or job function.

## Description

### Cross-Reference to Related Applications

This application claims priority to U.S. Patent Application Serial No. 14/093,179, filed on November 29,2013, which is incorporated herein by reference in its entirety.

### Background

In the field of plant automation and controls, it has been known to provide various computerized maintenance management systems (CMMSs) that maintain a database of plant equipment and maintenance operations. For instance, the need for generators to have circuits tested, fans, turbines, shafts, or other rotating machinery to have bearings inspected or lubrication replaced, or other maintenance or repair actions undertaken, can be logged into the CMMS database, for inspection by maintenance engineers, plant managers, or others.

In general, the workflow required to cause those actions to take place involves multiple tools, techniques, decision points and records which can involve a number of disciplines, domains, and personnel. It can therefore be difficult for end-users to readily or quickly gain an overview of the entire history or chain of events related to a given asset, as well as to act upon that information once located.

It may be desirable to provide methods and systems for integrated workflow display and action panel for plant assets, in which all information necessary to carry out maintenance, repair, and/or related operations in a given plant or other facility can be collected at a central point and presented in a unified display or view, which can be customized or optimized for a given user or for given maintenance tasks or activities.

### Brief Description of the Drawings

The accompanying drawings, which are incorporated in and constitute a part of this specification, illustrate implementations of the present teachings and together with the description, serve to explain the principles of the present teachings. In the figures:
Figure 1 illustrates an environment that can be used in systems and methods for an integrated workflow display and action panel for plant assets, according to various implementations;
Figure 2 illustrates an aggregate view of status data related to the set of assets of a plant, according to an embodiment.
Figure 3 illustrates an aggregate view of status data related to the set of assets of a plant, an embodiment.
Figure 4 illustrates an aggregate view of status data related to the set of assets of a plant, an embodiment.
Figure 5 illustrates a flowchart of various maintenance operations, according to an embodiment.
Figure 6 illustrates a flowchart of various data capture, maintenance management, and other operations, according to an embodiment.
Figure 7 illustrates exemplary hardware, software, and other resources that can be used in hardware supporting integrated workflow display and action panel for plant assets, according to an embodiment.

### Detailed Description

Reference will now be made in detail to exemplary implementations of the present teachings, which are illustrated in the accompanying drawings. Where possible the same reference numbers will be used throughout the drawings to refer to the same or like parts.

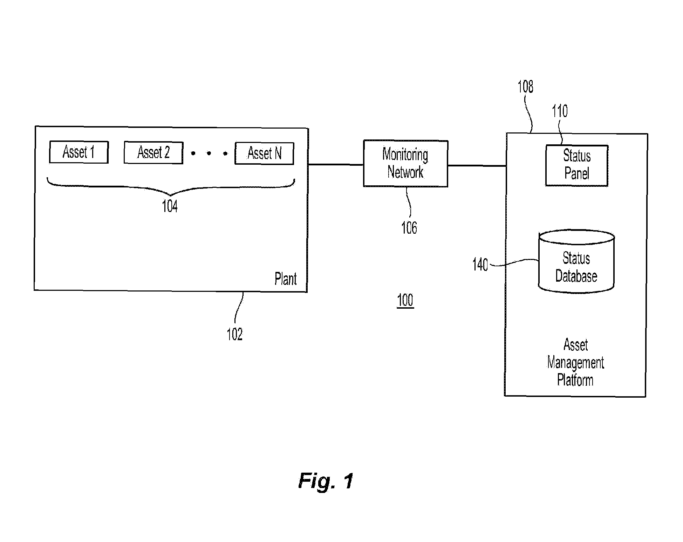

Figure 1 illustrates an overall environment in which systems and methods for an integrated workflow display and action panel for plant assets can operate, according to an embodiment. As shown, an overall environment 100 of a given plant 102 can be connected to a monitoring network 106 for maintenance, monitoring, scheduling, and management operations described herein. The plant 102 can contain, host, operate, or include a set of assets 104, which can be or include mechanical, electrical, electronic, pneumatic, and/or other machinery, equipment, or parts.

The set of assets 104 can, for example, depending on the installation, include equipment such as boilers, fans, engines, turbines, valves, compressors, monitoring and/or process control instruments and sensors, couplings, gears, gauges, pumps, power supplies and related circuitry, motors, fluid or material storage, pipes, heating, ventilation, and cooling (HVAC) assets, fire and/or gas detectors, heat exchangers, machine tool equipment, oil and gas production equipment, pulp and/or paper equipment, and/or other hardware, infrastructure, or assets. The plant 102 itself can be or include, merely for example, a factory, a chemical plant, an electrical power or other energy plant, or other plant, installation, or facility.

The set of assets 104 can be connected to, and monitored by, a monitoring network 106, which can consist of or include sensors, transducers, and/or other monitoring instruments or devices. The monitoring network 106 can be or include data and/or analog connections to the set of assets 104, including, for instance, Ethernet and/or other local area network (LAN) connections, other wired or optical connections, and/or wireless connections such as WiFi™, WiMax™, and/or other channels, connections, or other communications links.

The monitoring network 106 can in turn be connected by the same types or similar types of wired, wireless, and/or optical communications links, to an asset management platform 108. The asset management platform 108 can be or include a server, desktop, laptop, and/or other computer, and/or other network-enabled device, such as a smart phone, network-enabled tablet, and/or other network-enabled mobile device.

In general, the asset management platform 108 can perform logic to manage and maintain the set of assets 104, including to generate and display a status panel 110, which presents the operational, maintenance, historical, and other conditions of any one or more assets in the set of assets 104 of the plant 102. The status panel 110, which can be generated in graphical form, such as tabular, chart-based, database, and/or other form, can include selectable gadgets, icons, fields, and/or other objects that can be used to examine, analyze, manipulate, and/or control the maintenance and operation of the set of assets 104, using an integrated view or interface. The view or interface is in general an aggregate view which displays, or can display, status data associated with any one or more, or all, connected assets in the plant 102. The status panel 110 can be generated and operated using computer software, services, and/or logic, which can be executed on the asset management platform 108, and/or on other local or remote resources, such as web-based services, a cloud-based network, and/or others. The asset management platform 108 can host or access additional computing, memory, networking, and/or other hardware or software resources, including a status database 140 to store data related to the set of assets 104 and related facilities of the plant 102.

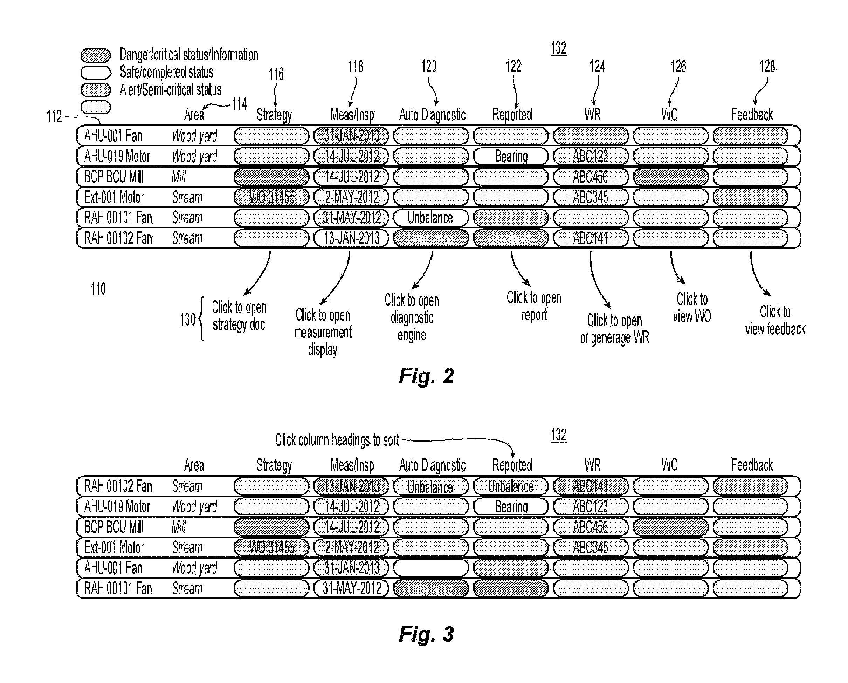

More specifically and as for instance illustrated in Figure 2, in an embodiment, the status panel 110 can be or include a set of columns 132 including, merely for instance, an asset column 112 that enumerates and/or identifies one or more of the set of assets 104 being tracked and managed, an area column 114 indicating an area of a referenced asset located in or associated with the plant 102, as well as a strategy column 116 indicating a code or reference to a maintenance action, standard, and/or routine to be performed for the maintenance of the referenced asset.

The status panel 110 can, in addition, display a measurement and inspection column 118, which can, amongst other information, record the date or dates of inspection or measurement activity for a referenced asset, such as to indicate when a pressure measurement was performed, or a vibration test was executed. The status panel 110 can further include an auto-diagnostic column 120, which can indicate an automatic diagnostic routine, test, or analysis that can be initiated based on the information contained in the measurement and inspection column 118, and other data. For example, and as shown, a detected condition in a fan asset can cause an unbalanced diagnostic routine to be performed, to determine the vibration or other state of the asset. Other diagnostics can be initiated and/or recommended actions can be presented, for example, as an information alert or as an activatable link to other routines, records, or services.

The status panel 110 can likewise include a reported column 122, indicating a reported condition for the referenced asset, such as a bearing condition, an unbalanced condition, or others. The status panel 110 can, further, include a work request (WR) column 124 and a work order (WO) column 126 as well, indicating maintenance or other activities which have been completed, ordered, recorded, and/or are otherwise in process. The status panel 110 can be provided with icons, popups, fields, and/or other displays or gadgets related to the status indicators indicating live information related to the status indicators, such as to showing in a popup or other object a work order number associated with one or more entries in the panel for Work Orders. The status panel 110 can also as shown include a feedback column 128, which can include notes, feedback, and/or other data provided by a maintenance engineer, plant manager, and/or other user.

The data collected and presented in the status panel 110 can be encoded in a selectable form which allows columns, data, fields, icons, and/or other objects to be opened, executed, expanded, and/or otherwise manipulated or activated. In implementations as shown, for instance, the status panel 110 can present a set of activatable links 130, which can be clicked or otherwise activated by the user to open or run additional routines, outputs, windows, screens, panels, options, gadgets, and/or other data or displays. In implementations as shown, the set of activatable links 130 can be related directly to the functions of their associated columns, or can in implementations be associated with other functions or resources. Again, the status panel 110 and associated logic provides a common framework, which allows a plant manager, engineer, or other user to access status information related to any connected plant asset, and operate on that data to manipulate any asset available through the status panel 110 using a single application or service, rather than requiring the user to manually locate individual applications, routines, or services for each separate asset. In addition, all information for the set of assets 104 for the entire plant 102 can be stored and located in a single status database 140 and/or other data store, record, or repository, without a need to separately locate or access status information for various assets. It will also be appreciated that the set of assets 104 and all related data can be extensible and be revised or updated at any time, while preserving an integrated view and set of tools via the status panel 110.

According to an embodiment, as shown in Figure 3, the set of columns 132 can include additional selectable functionality, such as the ability to sort any column in the set of columns 132 based on data fields or entries in a selected column In implementations as shown, the set of columns can be sorted on the reported column 122, which can cause those assets having a reported maintenance event to be sorted to the top, allowing the user to readily identify assets having events of comparatively higher priority or importance. Other sorts or orderings of the set of columns 132 are possible. In implementations, one or more rows, columns, fields, and/or other elements of the status panel 110 can be encoded with color coded indicators, to show a condition or status of a given field or variable, and/or for other purposes. In implementations, the color coding of a field, cell, and/or entry can be dynamic, and change with changing values of that information.

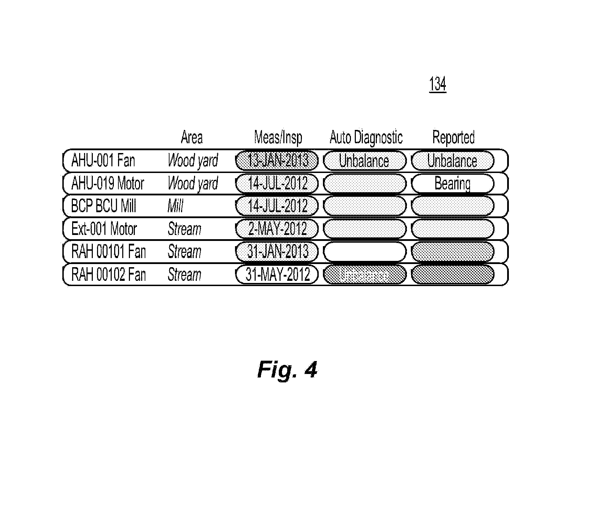

In addition, and as for instance shown in Figure 4, the columns selected for presentation in the set of columns 132 can be filterable or adjustable based on the credentials, privileges, or status of the user operating the status panel 110 to produce a filtered status display 134. In implementations as shown in that figure, for instance, a user who is categorized as a diagnostic technician can be presented with a reduced set of columns which most directly pertain to the functions of a diagnostic technician, as opposed, merely for example, to an accounting employee or ordering clerk. Other job categories, user classifications, privileges, or assignments can be used to reduce (or if desired, to expand) the columns or other information displayed in the status display 110, based on those user privileges, credentials, or identification, and/or other credentials or information. It will be appreciated that while illustrated implementations show the status panel 110 organized by columns and rows, in implementations, the information can be organized along different rows and/or columns, or be organized in different arrangements, including, for instance, in three-dimensional storage objects, trees, lists, and/or other arrangements or presentations of data.

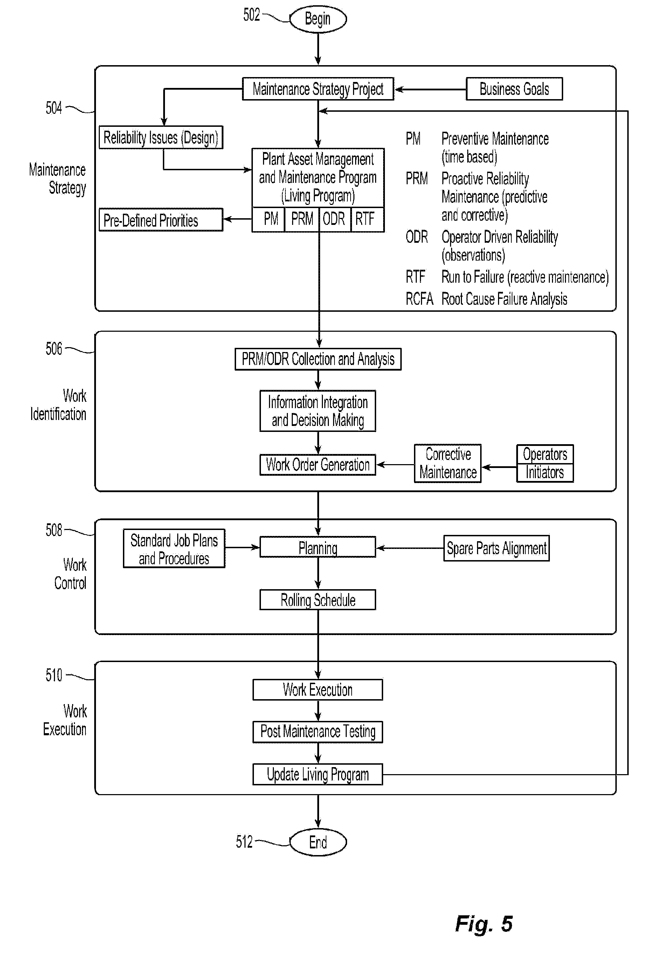

Figure 5 illustrates a flowchart of a generalized workflow that can be used, accessed, and/or integrated while carrying out maintenance and other activities, consistent with platforms and techniques herein. In 502, processing can begin. In 504, a maintenance strategy or procedure can be entered and executed, including to define or access business goals, reliability issues, priorities, planned life cycles for assets, and perform or undertake other activity. In 506, a work identification strategy or procedure can be entered and executed, including to collect data, integrate plant-related information, and generate one or more work orders or related tasks.

In 508, a work control strategy or procedure can be entered and executed, including to perform planning, parts alignment, hiring tasks, and/or other activities. In 510, a work execution strategy or procedure can be entered or executed, including to execute defined work tasks and to perform post-maintenance testing. In 512, processing can end, return to a prior processing point, jump to a further processing point, or end. It will be appreciated that the workflow outline shown in Figure 5 is general in nature, and that various tasks within various procedural steps or stages and be re-ordered, changed, updated, removed, and/or combined with other procedures.

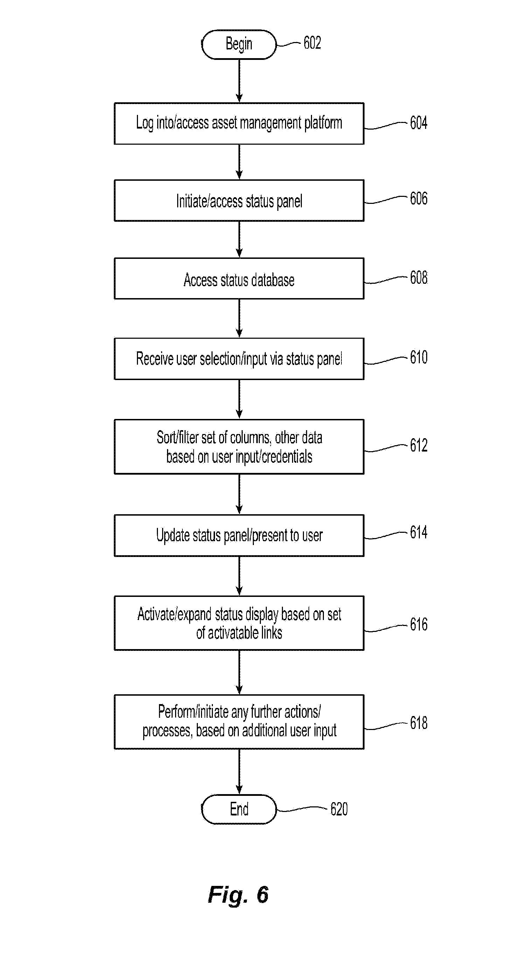

Figure 6 illustrates a flowchart of status generation, display, updating, and other processing that can be performed in systems and methods for integrated workflow display and action panel for plant assets, according to aspects. In 602, processing can begin. In 604, a user can log into or otherwise access the asset management platform 108, such as from a desktop computer, laptop computer, terminal, smart phone, and/or other device. In 606, the user can access and/or initiate the status panel 110, such as by clicking an icon or widget, loading or initiating an application program, and/or taking other actions. In 608, the user and/or status panel 110 or related logic can access the status database 140, for instance to retrieve newly collected data from the set of assets 104, or other information. In 610, user selections and/or other inputs can be received via the status panel 110, for instance, to receive a selection of a column in the set of columns 132 to sort those columns based on a key, field, or other basis.

In 612, the set of columns 132 and/or other data can be sorted or filtered based on user inputs and/or user credentials, such as a code for the user's job function. In 614, the status panel 110 can be updated and/or displayed to the user, for example to show an updated set of columns 132 now sorted by date, reduced based on the user's job code, and/or other field or key. In 616, the status display 110 can be activated and/or expanded based on the user manipulation of the set of activatable links 130, such as to expand a view of existing work orders or completed maintenance dates. In 618, the asset management platform 108 can perform and/or initiate any further actions or processes, based on additional user input or other triggers. In 620, processing can repeat, return to a prior processing point, jump to a further processing point, or end.

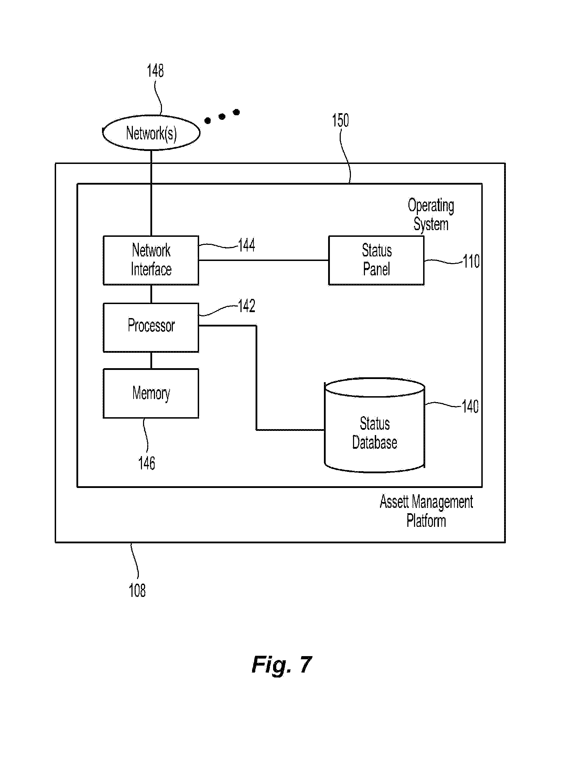

Figure 7 illustrates various hardware, software, and other resources that can be used in implementations of integrated workflow display and action panel for plant assets, according to implementations. In implementations as shown, the asset management platform 108 can include a platform including processor 142 communicating with memory 146, such as electronic random access memory, operating under control of or in conjunction with an operating system 150. The processor 142 in implementations can be incorporated in one or more servers, clusters, and/or other computers or hardware resources, and/or can be implemented using cloud-based resources. The operating system 150 can be, for example, a distribution of the Linux™ operating system, the Unix™ operating system, the Windows™ family of operating systems, or other open-source or proprietary operating system or platform. The processor 142 can communicate with the status database 140, such as a database stored on a local hard drive or drive array, to access or store data related to the set of assets 104, and/or subsets of selections thereof, along with other content, media, or other data.

The processor 142 can further communicate with a network interface 144, such as an Ethernet or wireless data connection, which in turn communicates with one or more networks 150, such as the Internet or other public or private networks. The processor 142 can, in general, be programmed or configured to execute control logic and to control various processing operations, including to generate display and updates to the status panel 110. In aspects, other access terminals, devices, networking, or computing resources can be or include resources similar to those of the asset management platform 108, and/or can include additional or different hardware, software, and/or other resources. Other configurations of the overall environment 100, the asset management platform 108, associated network connections, and other hardware, software, and service resources are possible.

The foregoing description is illustrative, and variations in configuration and implementation may occur to persons skilled in the art. For example, while implementations have been described in which one asset management platform 108 monitors and controls one plant 102, in implementations, more than one local or remote asset management platform 108 can monitor and control one plant, or multiple plants or other facilities.. Similarly, while implementations have been described in which data is stored in one status database 140, in implementations, data associated with the set of assets 104 can be stored in multiple local or remote data stores, including in a cloud-based network.

Other resources described as singular or integrated can in implementations be plural or distributed, and resources described as multiple or distributed can in implementations be combined. The scope of the present teachings is accordingly intended to be limited only by the following claims.

## Claims

1. A method of monitoring a plant, comprising:
accessing status data associated with a set of assets of the plant;
presenting an aggregate view of the status data for the set of assets via a status panel; and
initiating an operation on the aggregate view of the status data based on at least one of user input or user credentials.

2. The method of claim 1, wherein the set of assets comprises at least one of: boiler assets, fan assets, engine assets, turbine assets, valve assets, compressor assets, monitoring assets, process control assets, coupling assets, gear assets, gauge assets, pump assets, power supply assets, motor assets, fluid or material storage assets, pipe assets, heating, ventilation, and cooling (HVAC) assets, fire detector assets, gas detector assets, heat exchanger assets, machine tool equipment assets, oil and gas production assets, pulp equipment assets, or paper equipment assets.

3. The method of claim 1, wherein the status data comprises at least one of strategy data, measurement data, inspection data, diagnostic data, report data, work report data, work order data, process data, product quality data, or feedback data.

4. The method of claim 3, wherein the report data comprises an indication that a fault or maintenance item has been reported for a corrective response.

5. The method of claim 1, wherein the status data is captured via a monitoring network connected to the set of assets, and transmitted to an asset management platform.

6. The method of claim 1, wherein the aggregate view of the status data comprises at least one of a set of columns or a set of rows associated with respective assets displayed on the status display.

7. The method of claim 6, wherein the aggregate view of the status data comprises a set of activatable links.

8. The method of claim 7, wherein activating a link in the set of activatable links initiates an updated view or additional action on the aggregate view of the status data.

9. The method of claim 8, wherein the additional action comprises a sort operation performed on at least one of the set of columns or the set of rows.

10. The method of claim 1, wherein the operation initiated on the aggregate view of the status data comprises a filtering operation on the aggregate view of the status data based on user credentials.

11. A system, comprising:
a monitoring network connected to a set of assets of a plant; and
a processor, communicating with the set of assets of the plant via the monitoring network, the processor being configured to:
access status data associated with the set of assets of the plant,
present an aggregate view of the status data for the set of assets via a status panel, and
initiate an operation on the aggregate view of the status data based on at least one of user input or user credentials.

12. The system of claim 11, wherein the set of assets comprises at least one of: boiler assets, fan assets, engine assets, turbine assets, valve assets, compressor assets, monitoring assets, process control assets, coupling assets, gear assets, gauge assets, pump assets, power supply assets, motor assets, fluid or material storage assets, pipe assets, heating, ventilation, and cooling (HVAC) assets, fire detector assets, gas detector assets, heat exchanger assets, machine tool equipment assets, oil and gas production assets, pulp equipment assets, or paper equipment assets.

13. The system of claim 11, wherein the status data comprises at least one of strategy data, measurement data, inspection data, diagnostic data, report data, work report data, work order data, process data, product quality data, or feedback data.

14. The system of claim 13, wherein the report data comprises an indication that a fault or maintenance item has been reported for a corrective response.

15. The system of claim 11, wherein the status data is captured via a monitoring network connected to the set of assets, and transmitted to an asset management platform.

16. The system of claim 11, wherein the aggregate view of the status data comprises at least one of a set of columns or a set of rows associated with respective assets displayed on the status display.

17. The system of claim 16, wherein the aggregate view of the status data comprises a set of activatable links.

18. The system of claim 17, wherein activating a link in the set of activatable links initiates an updated view or additional action on the aggregate view of the status data.

19. The system of claim 18, wherein the additional action comprises a sort operation performed on at least one of the set of columns or the set of rows.

20. The system of claim 11, wherein the operation initiated on the aggregate view of the status data comprises a filtering operation on the aggregate view of the status data based on user credentials.
